# DEMANDE DE BREVET EUROPEEN

(11) **EP 4 141 376 A1**
(43) Date de publication de la demande: **01.03.2023**
(21) Numéro de dépôt: 21193677.8
(22) Date de dépôt: 28.08.2021
(51) Int. Cl.: G01B 5/008, G01B 11/03, B23Q 3/155, G01B 5/012, G01B 11/00

(54) **DISPOSITIF DE CHANGEMENT D'OUTILS DE MESURE ET MACHINE COMPORTANT UN TEL DISPOSITIF**

(71) Demandeur: ESPI SUISSE Sàrl, 1400 Yverdon-les-Bains VD (CH)
(72) Inventeur: Jabes, Samuel, 1170 Aubonne (CH); Ramelet, Jérémie, 1010 Lausanne (CH); Mainand, Jérôme, 38090 Villefontaine (FR)
(74) Mandataire: Omnis-IP

(57) **Abrégé**

La présente invention concerne un dispositif de changement d'outils de mesure pour une machine de contrôle de pièces mécaniques. Cette machine de contrôle comporte au moins un bâti (11) et une tête de mesure (21) agencée pour recevoir un outil de mesure (22). Le dispositif de changement d'outils de mesure comporte un moins un rack (25) pourvu de logements (28) destinés à recevoir des outils de mesure (22). Le dispositif de changement d'outils de mesure est caractérisé en ce qu'il comporte au moins deux ensembles came - suiveur de came, en ce que le rack (25) est supporté par les suiveurs de cames (27), et en ce que les ensembles came - suiveur de came sont agencés pour déplacer le rack (25) entre une position de changement d'outil dans laquelle un logement (28) dudit rack (25) est disposé dans une position atteignable par ladite tête de mesure (21), et une position de stockage dans laquelle ledit rack (25) est hors d'accès de ladite tête de mesure (21).

L'invention concerne en outre une machine de contrôle de pièces mécaniques comportant un tel dispositif de changement d'outils de mesure.

## Description

### DOMAINE TECHNIQUE

La présente invention concerne le domaine du contrôle de pièces mécaniques et plus précisément le domaine des machines de contrôle de pièces mécaniques.

De façon plus détaillée, cette invention concerne un dispositif de changement d'outils de mesure pour une machine de contrôle de pièces mécaniques, cette machine comportant au moins un bâti et une tête de mesure agencée pour recevoir un outil de mesure, le dispositif de changement d'outils de mesure comportant un moins un rack pourvu de logements destinés à recevoir des outils de mesure.

Cette invention concerne également une machine de contrôle de pièces mécaniques comportant un tel dispositif de changement d'outils de mesure.

Une telle machine peut en particulier être utilisée dans le cadre du contrôle dimensionnel de pièces ou du contrôle de l'état de surface, aussi bien dans un laboratoire de métrologie que dans un environnement de production.

### ART ANTÉRIEUR

Actuellement, il existe plusieurs types de machines utilisées pour le contrôle de pièces mécaniques et en particulier pour le contrôle de la conformité des pièces par rapport à des spécifications relatives à ces pièces. Parmi ces différents types de machines, on peut citer les machines à mesurer tridimensionnelles (MMT). Celles-ci sont généralement destinées à contrôler si une pièce est conforme à des spécifications déterminées. Ce contrôle se fait généralement en mesurant des dimensions et/ou des caractéristiques géométriques de la pièce, puis en utilisant le résultat de ces mesures pour en déduire la conformité ou la non-conformité de la pièce. Certaines machines permettent également de contrôler d'autres paramètres ou caractéristiques de la pièce, comme par exemple son état de surface.

Les mesures effectuées sur la pièce sont réalisées en utilisant un outil de mesure adapté qui doit être monté sur la machine. Un tel outil de mesure peut être notamment un capteur tactile ou sans contact, un palpeur, un stylet ou une sonde.

Lorsqu'elles sont utilisées pour une mesure dimensionnelle et/ou géométrique, ces machines déterminent des coordonnées de points mesurés ou points de contrôle dans un référentiel lié à la machine de contrôle ou à la pièce contrôlée. Ces coordonnées sont traitées de façon à vérifier l'adéquation entre les dimensions théoriques et les dimensions réelles de la pièce.

Ces machines comportent généralement un bâti et une table sur laquelle est fixée la pièce à contrôler. La machine comporte généralement un portique monté sur des glissières et une tête de mesure ou tête porte-outil montée sur le portique. L'outil de mesure est monté sur la tête de mesure. Le déplacement de la tête de mesure peut se faire selon trois axes orthogonaux définissant trois degrés de liberté, ce qui permet d'amener la tête de mesure et donc l'outil de mesure en regard des différents points de contrôle.

L'outil de mesure, adapté à la mesure à effectuer, est fixé à la tête de mesure, puis déplacé jusqu'à ce qu'il soit en appui contre la pièce mécanique à contrôler ou en regard de cette pièce. La position de l'outil de mesure est connue grâce à une calibration et à la connaissance de la position de la tête de mesure. Cette position de la tête de mesure est déterminée au moyen de règles graduées, de codeurs ou par d'autres moyens de mesure.

Dans la pratique, il est souvent nécessaire d'utiliser plusieurs outils de mesure pour mesurer l'ensemble des paramètres ou des caractéristiques d'une pièce. Ceci implique de changer l'outil de mesure de la tête de mesure.

Les machines de mesures actuelles présentent souvent certains inconvénients. Il existe en particulier des machines de mesure ayant une tête de mesure susceptible de se déplacer selon au moins trois degrés de liberté et dans lesquelles la tête de mesure se déplace pour prélever automatiquement un outil de mesure. Dans ces machines, plusieurs outils de mesure sont disposés dans une zone accessible à la tête de mesure, généralement sur un support. Lorsqu'un outil de mesure doit être mis en place, la tête de mesure est déplacée de façon à être positionnée à proximité de l'outil de mesure à mettre en place, puis ce dernier est prélevé du support par la tête de mesure. Il est clair que les outils susceptibles d'être prélevés de leur support par la tête de mesure doivent être accessibles par celle-ci. Ceci implique que les outils et leur support sont disposés dans le volume de travail de la tête de mesure. Ceci diminue le volume utile de la machine, soit le volume dans lequel la pièce à contrôler doit être contenue lors des mesures ou des contrôles. En effet, une partie du volume de travail est occupée par les outils de mesure.

Un autre inconvénient de ces machines vient du fait qu'il est nécessaire de déplacer la tête de mesure pour prélever l'outil de mesure. Du fait de la vitesse de déplacement relativement lente des axes des machines connues portant la tête de mesure, le temps de cycle de chargement d'un outil de mesure est relativement long. Un temps de cycle compris entre 5 et 30 secondes est courant.

Il serait souhaitable de disposer d'une machine susceptible de contrôler différents types de pièces et différentes caractéristiques des pièces, idéalement sans devoir retirer la pièce de la machine de contrôle. La machine devrait être prévue pour minimiser l'encombrement ou optimiser le rapport entre le volume utile et le volume total. Le temps de cycle de contrôle devrait également être minimisé . En particulier, la durée du changement de l'outil de mesure devrait être minimisée de façon à réduire le temps pendant lequel la machine ne réalise pas de mesures.

### DESCRIPTION DE L'INVENTION

La présente invention résout certains problèmes des machines de l'art antérieur en proposant une machine à mesurer tridimensionnelle multicapteurs, dans laquelle le temps requis pour changer de capteur ou d'outil de mesure est minimisé, ayant un bon rapport volume total/volume utile et permettant de réaliser des mesures fiables et précises dans un temps considérablement réduit par rapport aux machines de l'art antérieur.

Le but de l'invention est atteint par un dispositif de changement d'outils de mesure tel que défini en préambule et caractérisé en ce qu'il comporte au moins deux ensembles came - suiveur de came, en ce que le rack est supporté par les suiveurs de cames, et en ce que les ensembles came - suiveur de came sont agencés pour déplacer le rack entre une position de changement d'outil dans laquelle un logement dudit rack est disposé dans une position atteignable par ladite tête de mesure, et une position de stockage dans laquelle ledit rack est hors d'accès de ladite tête de mesure.

Le but de l'invention est également atteint par une machine de contrôle de pièces mécaniques telle que définie en préambule et comportant un dispositif de changement d'outils de mesure tel que défini ci-dessus.

La machine de l'invention permet un contrôle fiable et précis des pièces mécaniques. Cette machine permet en particulier d'effectuer des contrôles tridimensionnels de ces pièces tout en minimisant le volume total de la machine par rapport à la dimension de la pièce à contrôler ou au volume utile de la machine. En effet, pendant une mesure, le volume accessible par la tête de mesure est totalement disponible et les outils de mesure susceptibles d'être utilisés lors d'une mesure ou d'un contrôle ultérieur ne sont pas placés dans ce volume accessible par la tête de mesure et n'interfèrent donc ni avec les déplacements de la tête de mesure, ni avec la pièce à mesurer.

Cette machine permet un temps de cycle de changement d'outil de mesure minimal notamment par le fait qu'au moment du changement d'outil, la tête de mesure effectue un mouvement limité, qui peut être très court en termes de distance à parcourir et donc en termes de durée. Par ailleurs, les outils de mesure étant relativement sensibles, le fait que leurs déplacements soient limités permet une plus grande rapidité lors du changement des outils de mesure.

Selon une variante particulière de l'invention, le temps requis pour un changement d'outil de mesure peut être minimisé par le fait que les outils peuvent être amenés à proximité de la tête de mesure « en temps masqué », c'est-à-dire pendant que la machine de mesure effectue une mesure. Ce temps de préparation et/ou de déplacement ne s'ajoute donc pas au temps requis pour effectuer une mesure.

La machine selon l'invention comporte un rack sur lequel sont disposés les différents outils de mesure qui sont susceptibles d'être utilisés pour effectuer des mesures sur une pièce à contrôler. Ce rack est mobile entre une position de stockage et une position de changement d'outil. Dans la position de stockage, ni le rack, ni les outils ne se trouvent dans le volume que la tête de mesure peut atteindre. De cette façon, la totalité du volume de travail est libre pour la tête de mesure. Dans la position de changement d'outil, les outils de mesure sont déplacés de façon à être accessibles par la tête de mesure. Ainsi, la tête de mesure peut prélever l'un des outils de mesure disposés sur le rack.

Le rack et les outils de mesure sont disposés de façon à ne pas dépasser de l'enveloppe extérieure de la machine de sorte que l'ensemble de la machine y compris les outils de mesure ne nécessite pas plus de place qu'une machine conventionnelle. En particulier la surface au sol de la machine selon l'invention n'est pas modifiée par l'adjonction du rack et des outils de mesure.

Lors du déplacement des outils de mesure entre la position de stockage et la position de changement d'outil, seule la position finale doit être répétable. Un certain jeu peut être prévu dans les positions intermédiaires, de sorte qu'il est possible de minimiser les frottements lors du déplacement, et d'avoir une vitesse de déplacement importante. Malgré ce jeu, le positionnement des outils utilisés lors d'une mesure peut être très précis et répétable.

Avec la machine selon l'invention, la durée nécessaire entre la fin d'une mesure avec un palpeur donné et le début d'une mesure avec un autre palpeur peut être très courte, par exemple de l'ordre de 1.5 à 2 secondes.

### BRÈVE DESCRIPTION DES DESSINS

La présente invention et ses avantages seront mieux compris en référence aux figures annexées et à la description détaillée d'un mode de réalisation particulier, dans lesquelles :

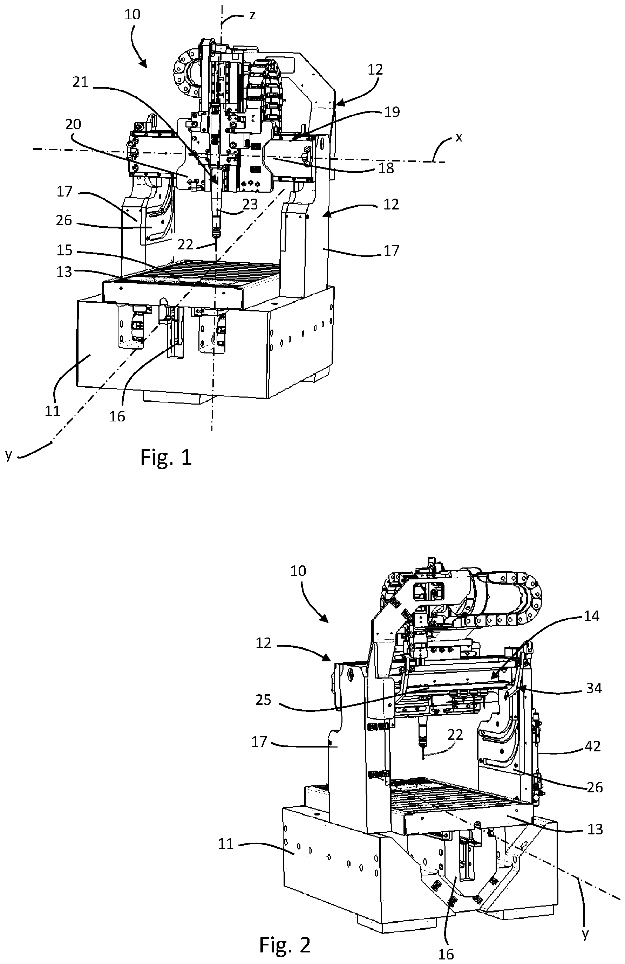

- la figure 1 est une vue générale de l'avant de la machine selon l'invention ;
- le figure 2 représente la machine de la figure 1, vue de derrière ;

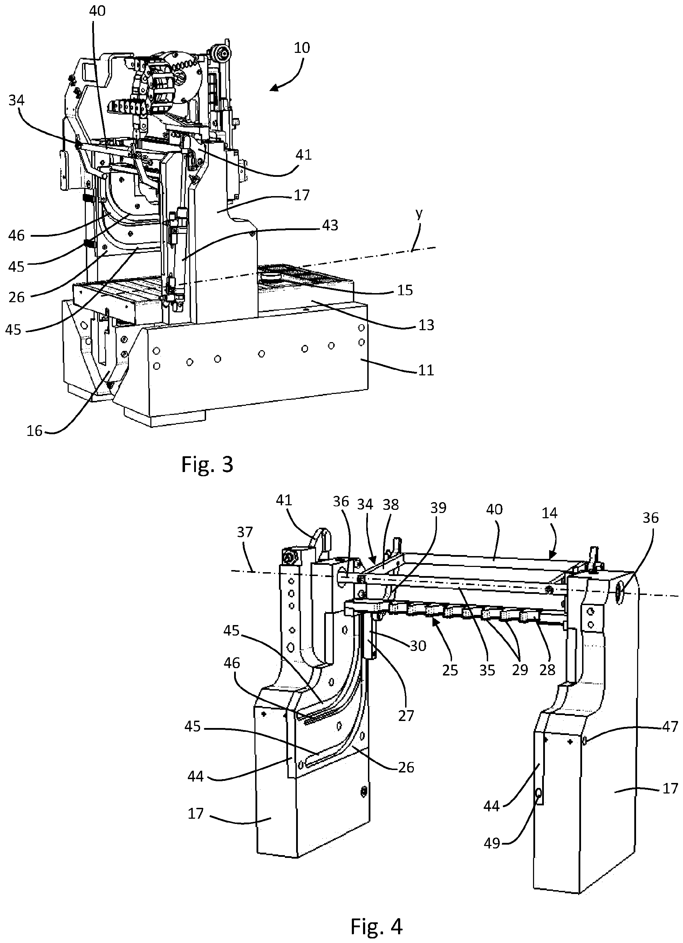

- la figure 3 illustre la machine de la figure 1, vue de côté ;
- la figure 4 représente un changeur d'outils de mesure selon la présente invention ;

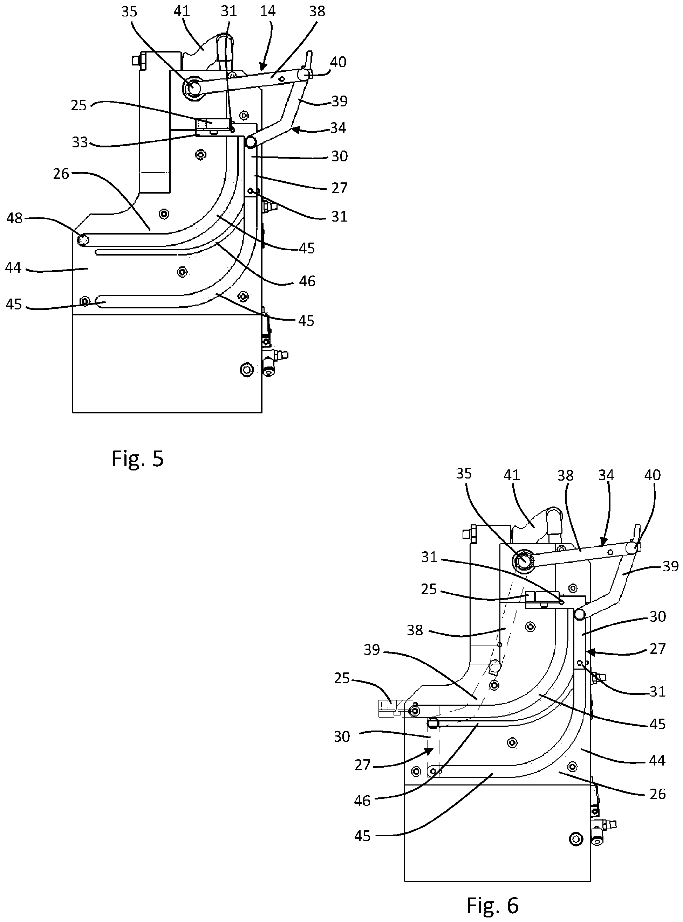

- la figure 5 et une vue de côté du changeur d'outils de la figure 4 ;
- la figure 6 représente deux positions du changeur d'outils de la figure 4, l'une des positions étant illustrée en traits pleins et l'autre position en traits interrompus ;
- la figure 7 illustre la tête de mesure de la machine de l'invention dans une première position ;
- la figure 8 illustre la tête de mesure de la figure 7 dans une deuxième position ; et

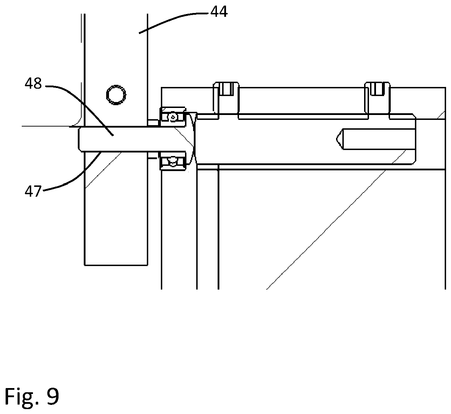

- la figure 9 est une vue de détail d'un élément de la machine de l'invention.

### MODE DE REALISATION DE L'INVENTION

En référence aux figures, la machine de contrôle 10 selon l'invention, comporte essentiellement un bâti 11, un portique 12, un plateau mobile 13 et un changeur d'outils de mesure 14.

Le plateau mobile 13 peut comporter un posage 15 sur lequel est placée la pièce mécanique à contrôler. Ce posage 15 est solidaire d'au moins une coulisse 16 liée au bâti 11 et agencée pour déplacer le posage 15 selon un axe longitudinal nommé axe y. La coulisse 16 est associée à un élément d'indexation (non représenté) destiné à déterminer la position de cette coulisse. Cet élément d'indexation permet de connaître la position du plateau mobile 13, du posage 15 et donc de la pièce à contrôler, de façon à permettre d'obtenir des coordonnées précises des points de mesure.

Le portique 12 comporte deux montants latéraux 17 solidaires du bâti 11 et disposés de part et d'autre du plateau mobile 13. Ce portique 12 comporte en outre une traverse 18 disposée entre les deux montants latéraux 17 et solidaire de ces montants. Cette traverse 18 comporte deux rails 19.

Un chariot 20 est placé sur la traverse 18 et comporte des éléments de guidage (non représentés) agencés pour se déplacer dans les rails 19 de la traverse 18 et pour guider ce chariot 20 le long de la traverse.

Le chariot 20 est mobile le long de la traverse 18 selon un axe longitudinal qui est perpendiculaire à l'axe de déplacement y du plateau mobile 13. Cet axe de déplacement du chariot est nommé axe x. La position du chariot 20 le long de la traverse 18 peut être connue avec précision en utilisant une règle de mesure absolue, connue en soi.

Le chariot 20 supporte une tête de mesure 21 agencée pour recevoir un outil de mesure 22 qui peut prendre la forme d'un capteur, d'un palpeur ou d'une sonde notamment, comme cela est mentionné plus haut.

La tête de mesure 21 est mobile sur le chariot 20, selon un axe de déplacement linéaire qui, dans le mode de réalisation illustré, est perpendiculaire à l'axe de déplacement x du plateau mobile et à l'axe de déplacement y du chariot. Dans l'exemple illustré, l'axe de déplacement de la tête de mesure est vertical et est nommé axe z.

Selon un mode de réalisation préféré, la tête de mesure 21 comporte un corps 23 agencé pour recevoir l'outil de mesure 22 et le maintenir sur le corps 23 au moyen d'une connexion magnétique. A cet effet, au moins l'un des éléments parmi le corps 23 et l'outil de mesure 22 comporte un ou plusieurs aimants et l'autre élément comporte soit un ou plusieurs aimants, soit au moins une pièce en métal magnétique.

Cette connexion magnétique permet de placer l'outil de mesure 22 sur le corps 23 de la tête de mesure 21 ou de l'en retirer facilement, sans outil et sans nécessiter d'intervention humaine en particulier.

Selon un mode de réalisation particulier, l'outil de mesure a une zone ayant une section transversale circulaire pourvue d'une gorge 24 formant un col de l'outil de mesure. Cette gorge permet de maintenir l'outil de mesure 22 dans un rack 25 décrit plus en détails plus bas. Selon une variante, la gorge peut comporter deux méplats permettant de positionner l'outil de mesure 22 dans une orientation connue dans le rack 25.

Par la combinaison des déplacements du chariot 20 le long de la traverse 18 et de la tête de mesure 21 sur le chariot 20, cette tête de mesure 21 dispose de deux degrés de liberté.

Le changeur d'outils 14 comporte notamment le rack 25 mentionné ci-dessus et deux ensembles came - suiveur de came, comportant chacun une came 26 et un suiveur de came 27.

Le rack 25 tel qu'utilisé dans la présente invention comporte une pluralité de logements 28 destinés à recevoir une pluralité d'outils de mesure. Dans un mode de réalisation préféré, les outils de mesure utilisés ont tous une zone ayant la même forme et les mêmes dimensions. Cette zone peut être par exemple être la zone ayant une section transversale circulaire pourvue de la gorge 24, mentionnée plus haut. Dans ce cas, les logements 28 peuvent également tous avoir les mêmes formes et les mêmes dimensions, celles-ci étant prévues pour recevoir le col de l'outil de mesure.

Il est également possible d'utiliser des outils de mesure ayant des formes ou des dimensions différentes. Dans un tel cas, il est possible d'utiliser un rack 25 ayant des logements 28 adaptés aux formes et aux dimensions des outils de mesure utilisés, de façon à pouvoir recevoir ces différents outils de mesure.

Dans le mode de réalisation illustré, le rack 25 comporte neuf logements 28 identiques permettant de recevoir neuf outils de mesure 22. Ces logements sont délimités par deux doigts 29 formant une fourchette. Ils ont une profondeur permettant de maintenir les outils de mesure de façon stable et efficace. Le maintien des outils de mesure peut être amélioré par exemple au moyen d'une liaison magnétique entre les outils et le rack 25. A cet effet, un aimant peut être placé à proximité de chaque logement 28 du rack de façon à ce que l'outil de mesure 22 correspondant soit maintenu en place dans le rack par cet aimant.

Les suiveurs de came 27 comportent chacun une équerre 30 pourvue de deux galets 31 et d'une goupille de guidage (non représenté). Ces équerres 30 sont liées au rack 25 et jouent le rôle de support de rack.

Les équerres 30 sont reliées aux montants latéraux de la machine de contrôle par un mécanisme de liaison 34 dont une forme de réalisation particulière est décrite ci-dessous.

Le mécanisme de liaison 34 comporte une première tige de liaison 35 dont des zones d'extrémité 36 sont liées chacune à l'un des montants latéraux 17. Cette première tige de liaison 35 est montée dans ces deux montants latéraux 17 de façon à pouvoir pivoter autour de son axe longitudinal 37. Le mécanisme de liaison 34 comporte, à proximité de chacune des extrémités de la première tige de liaison 35, un bras 38 et un avant-bras 39 reliés entre eux par une liaison pivotante. Dans le mode de réalisation illustré, la liaison pivotante entre le bras 38 et l'avant-bras 39 est matérialisé par une deuxième tige de liaison 40 reliant les deux bras 38 et les deux avant-bras 39. Il serait également possible de prévoir des liaisons pivotantes sans utiliser une deuxième tige de liaison. Chacun des bras 38 est lié à la première tige de liaison 35 de façon fixe ou pivotante. L'avant-bras 39 est relié de façon pivotante à l'équerre 30 correspondante supportant le rack.

L'une des zones d'extrémité 36 de la première tige de liaison 35 dépasse du montant latéral 17 de la machine de contrôle et est liée par un organe de liaison 41 à un actuateur 42. Cet organe de liaison 41 est lié de façon rigide à la première tige de liaison 35 de sorte que la rotation de l'organe de liaison 41 entraine la rotation de cette première tige de liaison 35 autour de son axe longitudinal 37. L'organe de liaison 41 est lié également à l'actuateur 42 qui prend la forme d'un vérin 43 pneumatique dans le mode de réalisation illustré.

La machine de contrôle selon l'invention comporte une plaque 44 solidaire de chacun des montants latéraux 17, les cames 26 étant réalisées dans ces plaques 44. Ces cames 26 sont du type came à rainures, les rainures formant le chemin de came.

Plus précisément, chaque plaque 44 comporte trois rainures. Deux rainures, nommées rainures de guidage 45 sont destinées à guider les deux galets 31 de l'équerre 30. La troisième rainure fait office de détrompeur 46 et est destinée à guider la goupille de guidage de cette équerre 30. Les galets 31 sont prévus pour guider l'équerre 30 le long des rainures de guidage 45 de la came 26, de telle façon que les logements 28 du rack 25 restent dans une position sensiblement horizontale tout le long du déplacement de ce rack. La forme des rainures de guidage 45 et le positionnement des galets 31 implique que les équerres 30 passent par un point d'inflexion dans lequel le rack 25 pourrait prendre deux positions distinctes. L'une de ces positions est une position souhaitée alors que l'autre position conduit au coincement du changeur d'outils 14. La goupille de guidage se déplace dans la rainure détrompeur 46 de la came de façon à assurer que les suiveurs de came 27 prennent la position souhaitée lors du passage au point d'inflexion.

Les rainures et les galets sont dimensionnés de façon à laisser un certain jeu lors du déplacement du rack. De cette façon, le rack peut se déplacer avec une vitesse élevée sans que les galets ne subissent des frottements importants. Ce jeu est supprimé lorsque les équerres atteignent la fin de leur course et donc lorsque le rack atteint la position de changement d'outil.

Afin de supprimer le jeu latéral, au moins l'une des rainures de guidage 45 comporte un taraudage, dénommé taraudage transversal 47, débouchant dans le fond de la rainure de guidage. Ce taraudage transversal 47 est agencé pour recevoir une goupille de réglage de battement 48 débouchant dans l'un des montants latéraux 17. L'extrémité opposée de la goupille de réglage de battement 48 débouche dans la rainure de guidage. L'axe longitudinal de la goupille de réglage de battement 48 est parallèle aux tiges de liaison 35, 40 et permet de régler ou de supprimer le jeu latéral du rack lorsqu'il arrive en fin de course.

De manière similaire, il est possible de prévoir un taraudage, dénommé taraudage longitudinal 49, débouchant à l'extrémité de l'une des rainures de guidage 45 et destiné à recevoir une vis de réglage (non représentée) accessible depuis l'extérieur du montant latéral. Cette vis de réglage est placée dans un sens perpendiculaire aux tiges de liaison 35, 40 et dans la direction du déplacement du rack lorsqu'il arrive en fin de course.

Lorsque l'équerre 30 est en fin de course, un élément de cette équerre prend appui contre les goupilles de réglage de battement 48 placées dans les taraudages transversaux 47. L'utilisation de goupilles placées dans les taraudages transversaux 47 permet d'assurer un positionnement latéral précis et répétable du changeur d'outils. Ainsi, malgré des jeux latéraux réalisés pour permettre un déplacement rapide du rack en minimisant les frottements lors de ce déplacement, la position atteinte en fin de course peut être connue avec précision et avec une grande répétabilité.

De manière similaire, un élément de l'équerre 30 peut prendre appui contre l'extrémité de la vis de réglage longitudinale qui joue le rôle de butée de fin de course. L'utilisation de cette vis de réglage permet d'assurer un positionnement précis et répétable du changeur d'outils 14 dans la position dans laquelle des outils de mesure 22 peuvent être chargés et/ou déchargés.

Selon l'implémentation de l'invention, les vis de réglage longitudinales sont absentes et la fin de course est atteinte lorsque les équerres arrivent en butée des cames et/ou lorsque le vérin ou l'actuateur a effectué la totalité du déplacement prévu.

Il est possible de prévoir un taraudage transversal 47 dans une seule des plaques 44 ou au contraire dans les deux plaques. De même, il est possible de prévoir un taraudage longitudinal dans une seule des plaques ou dans les deux.

Les dimensions des rainures de guidage 45, des rainures détrompeur 46 et des cames 26 sont telle qu'elles assurent un guidage des galets 31 et de la goupille de guidage sans générer de frottements importants grâce au jeu prévu entre les parois des rainures et les éléments de guidage. En fin de course des équerres 30 au contraire, c'est-à-dire lorsqu'un élément de l'équerre prend appui contre un goupille de réglage de battement 48, contre une vis de réglage et/ou contre une extrémité d'au moins l'une des rainures des cames et/ou lorsque le vérin 43 arrive en fin de course, les dimensions des rainures et/ou les positions des goupilles de réglage du battement et éventuellement des vis de réglage sont telles que le positionnement du rack 25 soit répétable et donc sans jeu, de façon à ce que les outils de mesure 22 soient dans une position prévisible et précise.

Il est à noter que la forme des rainures de guidage 45 de la came est telle que le rack 25 se déplace selon un mouvement horizontal au moins en fin de course, c'est-à-dire lorsqu'il approche la position de changement d'outil de mesure. Ce déplacement horizontal se fait au moins sur une distance correspondant au diamètre de l'outil de mesure 22 ou à la profondeur des logements 28 du rack.

Lorsqu'un outil de mesure 22 doit être mis en place sur la tête de mesure 21, la machine de contrôle 10 selon l'invention fonctionne de la manière suivante.

Supposons qu'au départ, la tête de mesure 21 ne porte pas d'outil et que le changeur d'outils 14 est dans sa position de stockage. Dans cette position, les suiveurs de came 27 sont placés à une extrémité de la came 26 opposée à la zone comportant la goupille de réglage du battement 48. Le changeur d'outils 14 porte un certain nombre d'outils de mesure 22. La pièce à contrôler est disposée sur le plateau mobile 13. Ce plateau mobile 13 peut tout d'abord être déplacé de façon à éloigner au maximum la pièce de la zone de mesure afin d'éviter qu'un outil de mesure placé dans les racks n'entre en contact avec la pièce lors du mouvement du changeur d'outils. Le mouvement du plateau mobile selon l'axe y est synchronisé avec les mouvements de la tête de mesure selon les axes x et z pour se placer à une position de changement d'outil.

La tête de mesure 21 est déplacée sur la traverse 18 le long de l'axe y au-dessus de du changeur d'outil, de préférence au-dessus de l'endroit où se trouvera l'outil à placer sur la tête de mesure 21.

Le vérin 43 faisant office d'actuateur 42 est actionné de telle façon qu'il entraîne le pivotement de la première tige de liaison 35 par l'intermédiaire de l'organe de liaison 41. Ce pivotement entraîne le pivotement du bras 38 et de l'avant-bras 39 du changeur d'outils 14. Ce déplacement de l'avant-bras 39 entraîne à son tour le déplacement des suiveurs de cames 27 le long des montants latéraux 17 du portique 12, les galets 31 de ces suiveurs de cames 27 étant guidés dans les rainures de guidage 45 des cames. Ce déplacement peut se faire avec un frottement relativement faible du fait du jeu existant entre les rainures et les galets des suiveurs de cames.

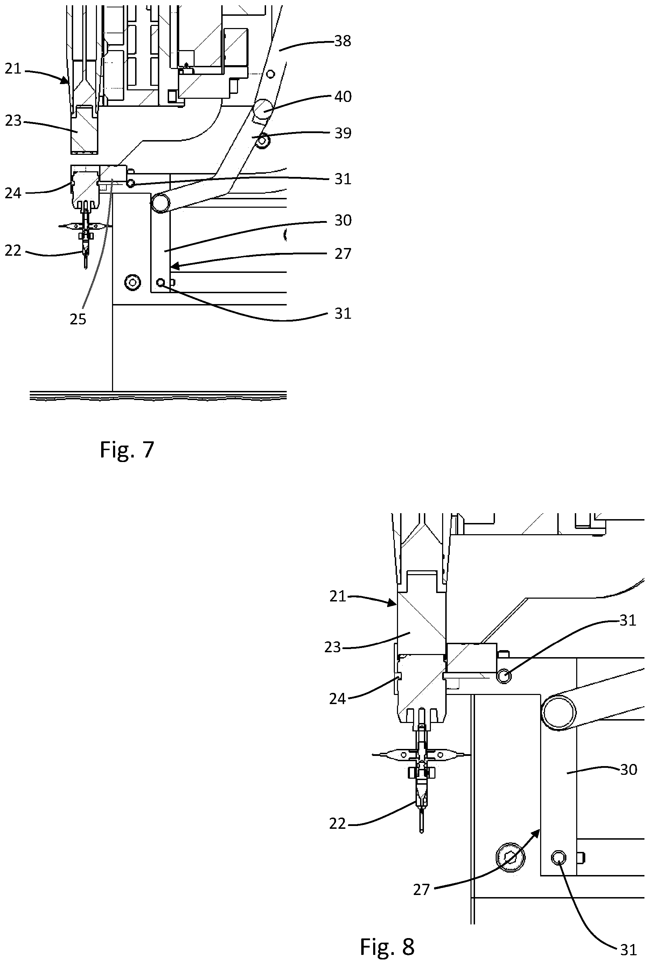

Les suiveurs de cames 27 sont guidés dans les rainures de guidage et les rainures détrompeur 46 des cames jusqu'à ce qu'un élément des équerres arrive en appui contre les goupilles de réglage du battement 48 et/ou les vis de réglage et que le changeur d'outils 14 atteigne la position de changement d'outil. Le changeur d'outils est arrêté dans cette position. Ceci correspond à la fin de course du vérin 43. Cette configuration est illustrée en particulier par la figure 7.

La tête de mesure 21 est ensuite déplacée selon son axe de déplacement z, vertical dans le mode de réalisation illustré, jusqu'à entrer en contact avec l'outil de mesure 22 à mettre en place. La liaison magnétique entre la tête de mesure 21 et l'outil de mesure 22 permet de maintenir cet outil de mesure sur la tête de mesure sans devoir agir mécaniquement sur l'un de ces éléments. Cette configuration est illustrée en particulier par la figure 8.

La tête de mesure 21 est ensuite légèrement déplacée verticalement vers le haut de façon à décoller l'outil de mesure 22 pour que la face supérieure de la gorge 24 et la face inférieure des doigts 29 formant la fourchette ne soient plus en contact. Ceci permet le mouvement de retrait du changeur d'outils sans frottement entre l'outil de mesure et le rack.

Le vérin 43 est alors actionné dans le sens inverse de l'actionnement précédent. Le début du mouvement se fait horizontalement de façon à sortir la fourchette de la gorge 24 de l'outil de mesure. Ce mouvement a pour effet de déplacer les suiveurs de cames 27 dans les cames 26 depuis leur position de changement d'outils vers leur position de stockage. Dans cette position, les outils de mesure 22 et le rack 25 ne sont plus dans la zone de travail de la machine. La pièce à contrôler peut être ramenée dans une position de contrôle déterminée, dans le cas où elle avait été éloignée pour des raisons de sécurité. La tête de mesure 21, équipée d'un outil de mesure 22 peut effectuer les contrôles prévus, sans que les autres outils disponibles ou le changeur d'outils ne soient dans une zone dans laquelle la tête de mesure pourrait devoir se déplacer pour contrôler la pièce mécanique.

Lorsqu'un autre outil de mesure doit être utilisé pour effectuer un contrôle, la tête de mesure 21 est tout d'abord positionnée au droit d'un logement libre du rack 25. Cette tête de mesure est ensuite déplacée verticalement jusqu'à ce que l'outil de mesure placé sur la tête de mesure soit disposé à une hauteur correspondant sensiblement à sa position dans le rack, lorsque le rack sera placé dans sa position de changement d'outil de mesure. Plus précisément, la hauteur de la tête correspond à une position dans laquelle la fourchette présente un jeu sensiblement équidistant entre le haut et le bas de la gorge 24.

Le déplacement du changeur d'outils 14 est ensuite réalisé en actionnant le vérin 43. Ce déplacement est le même que décrit plus haut. Lorsque le rack 25 arrive dans sa position de changement d'outil, l'outil de mesure 22 est positionné dans un logement vide du rack 25. La tête de mesure 21 est alors soulevée le long de l'axe z de façon à ce que l'outil de mesure s'appuie contre la face inférieure de la fourchette, puis se détache de la tête de mesure et reste dans le logement 28 du rack. Le chariot 20 est ensuite déplacé le long de la traverse 18, selon l'axe x de façon à amener la tête de mesure 21 en regard du nouvel outil de mesure à mettre en place. Cette tête de mesure 21 est ensuite abaissée selon l'axe z de façon à permettre la mise en place du nouvel outil de mesure, de manière similaire à ce qui a été décrit précédemment pour la mise en place d'un premier outil de mesure.

La machine selon l'invention a été décrite selon un mode de réalisation particulier. De nombreuses variantes sont envisageables sans sortir de la portée de la protection donnée par les revendications. A titre d'exemple, le rack 25 a été décrit comme comportant neuf logements. Le rack doit au minimum en comporter deux. L'un des logements doit être vide pour permettre la dépose d'un outil utilisé lors d'un changement d'outil. L'autre logement contient le nouvel outil à utiliser.

Le rack est linéaire et les logements sont alignés. Il est possible de prévoir un rack de forme circulaire, ayant par exemple la forme d'un barillet, contenant des logements similaires aux logements 28 du rack 25 tels que représentés par les dessins.

Il est également possible de disposer de plusieurs racks qui peuvent par exemple être chargés sur les équerres ou des supports pendant que la machine effectue une mesure. Ce mode de réalisation permet de disposer d'un plus grand nombre d'outils de mesure, si nécessaire. Il n'augmente toutefois pas le temps nécessaire pour le changement d'outil du fait que les outils et en particulier le choix du rack sur lequel se trouve le prochain outil à utiliser peut être fait en temps masqué, pendant que la machine effectue une mesure ou un contrôle.

Selon un mode de réalisation avantageux, les rainures des cames à rainure sont réalisées dans des plaques fixées de façon amovible au portique. Ceci peut être avantageux d'une part pour changer les plaques en cas d'usure par exemple et d'autre part, pour permettre de modifier la trajectoire des chariots guidés par ces rainures, par exemple dans le cas où le rack doit atteindre une position finale différente de la position avec les plaques actuelles.

L'actuateur décrit est formé d'un vérin pneumatique. Un tel vérin a l'avantage d'effectuer des déplacements rapides et d'être simple à commander. Il ne permet toutefois pas d'arrêts dans une position intermédiaire entre ses deux positions extrêmes. Il est possible d'utiliser un actuateur comportant par exemple un moteur électrique, permettant l'arrêt du rack dans une position intermédiaire, si cela est souhaité.

## Revendications

1. Dispositif de changement d'outils de mesure pour une machine de contrôle de pièces mécaniques, cette machine de contrôle comportant au moins un bâti (11) et une tête de mesure (21) agencée pour recevoir un outil de mesure (22), le dispositif de changement d'outils de mesure comportant un moins un rack (25) pourvu de logements (28) destinés à recevoir des outils de mesure (22), le dispositif de changement d'outils de mesure étant **caractérisé en ce qu'**il comporte au moins deux ensembles came - suiveur de came, **en ce que** le rack (25) est supporté par les suiveurs de cames (27), et **en ce que** les ensembles came - suiveur de came sont agencés pour déplacer le rack (25) entre une position de changement d'outil dans laquelle un logement (28) dudit rack (25) est disposé dans une position atteignable par ladite tête de mesure (21), et une position de stockage dans laquelle ledit rack (25) est hors d'accès de ladite tête de mesure (21).

2. Dispositif de changement d'outils de mesure selon la revendication 1, **caractérisé en ce que** lesdites cames (26) comportent au moins une rainure de guidage (45) agencée pour guider lesdits suiveurs de came (27).

3. Dispositif de changement d'outils de mesure selon la revendication 2, **caractérisé en ce que** les suiveurs de came (27) comportent au moins un galet (31) agencé pour se déplacer dans une rainure de guidage (45) de la came, et **en ce que** les dimensions des rainures de guidage (45) et des galets (31) sont prévues pour que les galets (31) se déplacent dans les rainures de guidage (45) avec du jeu.

4. Dispositif de changement d'outils de mesure selon la revendication 2, **caractérisé en ce qu'**au moins l'une des rainures de guidage (45) d'au moins une came (26) comporte une goupille de réglage de battement (48) débouchant dans une zone latérale de ladite rainure de guidage (45), cette goupille de réglage de battement (48) étant en contact avec le suiveur de came (27) correspondant lorsque le rack (25) est dans la position de changement d'outil.

5. Dispositif de changement d'outils de mesure selon la revendication 2, **caractérisé en ce qu'**au moins l'une des rainures de guidage (45) d'au moins une came (26) comporte une vis de réglage débouchant dans une zone longitudinale de ladite rainure de guidage, cette vis de réglage étant en contact avec le suiveur de came (27) correspondant lorsque le rack (25) est dans la position de changement d'outil.

6. Dispositif de changement d'outils de mesure selon la revendication 1, **caractérisé en ce qu'**il comporte un actuateur (42) agencé pour déplacer le rack (25) entre sa position de stockage et sa position de changement d'outil.

7. Dispositif de changement d'outils de mesure selon la revendication 6, **caractérisé en ce que** l'actuateur (42) comporte un vérin (43) pneumatique.

8. Dispositif de changement d'outils de mesure selon la revendication 1, **caractérisé en ce que** les rainures de guidage (45) des cames (26) comportent une zone linéaire agencées pour que, lorsque le rack (25) est déplacé vers sa position de changement d'outil, le déplacement de ce rack soit linéaire sur une distance égale au moins à la profondeur des logements (28) du rack, ce déplacement linéaire étant réalisé selon un axe (y) perpendiculaire aux axes de déplacement (x, z) de la tête de mesure (21).

9. Dispositif de changement d'outils de mesure selon la revendication 1, **caractérisé en ce que** les outils de mesure (22) sont maintenus sur la tête de mesure (21) au moyen d'une liaison magnétique.

10. Dispositif de changement d'outils de mesure selon la revendication 1, **caractérisé en ce que** les logements (28) du rack (25) sont disposés dans un plan et **en ce que** les positions de ce plan pendant le déplacement du rack (25) entre la position de stockage et la position de changement d'outil sont parallèles entre elles.

11. Machine de contrôle (10) comportant un dispositif de changement d'outils de mesure selon l'une quelconque des revendications 1 à 10.
